(19) Europäisches Patentamt
European Patent Office
Office européen des brevets

(11) Veröffentlichungsnummer: **0 445 673 B1**

(12) **EUROPÄISCHE PATENTSCHRIFT**

(45) Veröffentlichungstag der Patentschrift: **02.11.94**

(51) Int. Cl.$^5$: **C08G 69/32**, C08J 5/18, D01F 6/80

(21) Anmeldenummer: **91103136.7**

(22) Anmeldetag: **02.03.91**

(54) **Aromatische Copolyamide, Verfahren zu ihrer Herstellung und daraus geformte Gebilde.**

(30) Priorität: **07.03.90 DE 4007142**

(43) Veröffentlichungstag der Anmeldung:
**11.09.91 Patentblatt 91/37**

(45) Bekanntmachung des Hinweises auf die Patenterteilung:
**02.11.94 Patentblatt 94/44**

(84) Benannte Vertragsstaaten:
**AT BE CH DE DK ES FR GB GR IT LI LU NL**

(56) Entgegenhaltungen:
**EP-A- 0 199 090**
**EP-A- 0 364 892**
**DE-A- 2 556 883**

(73) Patentinhaber: **HOECHST AKTIENGESELLSCHAFT**

**D-65926 Frankfurt (DE)**

(72) Erfinder: **Keil, Günter, Dr.**
**Frankfurter Strasse 60**
**W 6238 Hofheim/Taunus (DE)**
Erfinder: **Heinrich, Karl, Dr.**
**Karwendelstrasse 2**
**W-8934 Grossaitingen (DE)**
Erfinder: **Klein, Peter, Dr.**
**Fasanenweg 13**
**W 6200 Wiesbaden (DE)**

**EP 0 445 673 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue aromatische Copolyamide des Dicarbonsäure/Diamintyps, Verfahren zu ihrer Herstellung, sowie daraus hergestellte geformte Gebilde wie Fäden, Fasern, Faserpulp, Filme und Folien.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Die Herstellung der dafür benötigten Polymeren erfolgt am günstigten in bekannter Weise durch Umsetzung von aromatischen Diaminen mit aromatischen Dicarbonsäuredichloriden in aprotischen organischen Lösungsmitteln vom Amid-Typ (N,N-Dimethylacetamid, N-Methylpyrrolidon, N,N,N',N'-Tetramethylharnstoff und dgl.), gegebenenfalls in Gegenwart von Calcium- oder Lithiumhalogeniden und Neutralisation des gebildeten Chlorwasserstoffs, beispielsweise mit Calciumoxid.

Fäden aus Polyaramiden mit hoher Festigkeit und hohem Anfangsmodul sind solche, bei denen die Amidbindungen koaxial oder nahezu parallel zueinander orientiert sind, wodurch starre, stäbchenförmige Polymermoleküle entstehen. Typische Polyamidfasern dieser Art bestehen beispielsweise aus Poly(p-phenylenterephthalamid). Derartige Fäden sind beispielsweise in der Deutschen Patentschrift 22 19 703 beschrieben.

Dieses Produkt weist eine Reihe von Vorzügen auf, die Herstellung des benötigten Polyamids und seine Verarbeitung sind jedoch sehr schwierig. Beispielsweise wegen der schlechten Löslichkeit in polaren organischen Lösungsmitteln - und zwar auch in Gegenwart von anorganischen Salzen wie Calciumchlorid oder Lithiumchlorid als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zu Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungmitteln haben, die sich auch gut verspinnen lassen und deren Filamente sich nach einer hohen Verstreckung durch hohe Festigkeitswerte und Anfangsmoduli auszeichnen.

So wurde beispielsweise in der DE-A-21 44 126 die Herstellung von löslichen aromatischen Polyamiden mit hohem Elastizitätsmodul beschrieben, wonach substituierte 3-(p-Aminophenoxy)-4-aminobenzanilide mit Terephthaloylchlorid gut lösliche Polyamide liefern, welche sich zu Filamenten von guten Festigkeiten und Anfangsmoduli verspinnen und verstrecken lassen.

Die erhöhte Löslichkeit wird hier durch die meta-Orientierung und das Sauerstoffbrückenatom verursacht. In der Deutschen Patentschrift 25 56 883 und in der Deutschen Offenlegungschrift 30 07 063 werden Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Nachteilig bei den vorgenannten Verfahren ist, daß die verschiedenen benötigten Amine nur in sehr aufwendigen Verfahren hergestellt und gereinigt werden können.

Aus diesem Grunde werden in DOS 35 10 655 und 36 05 394, in EPA 0 199 090, bzw. in US-PS 4 847 354 Terephthalamide mit 3 Diaminkomponenten in bestimmten, definierten Anteilen beschrieben, die in Amid-Lösungsmitteln gut löslich sind und durch Verformung Fäden oder Folien mit sehr guten Festigkeiten und Moduli liefern.

Nachteilig bei diesen Produkten, sowie bei Filamenten aus allen vorher erwähnten Polyaramiden ist eine rel. niedrige Reißdehnung (meist $\leq$ 4 %). Das ist nachteilig für die Weiterverarbeitung der Filamente, da meist eine niedere Reißdehnung eine hohe Quersprödigkeit bedeutet.

Es treten Probleme bei Fadenführorganen, Umlenkrollen u.d. mit kleinem Krümmungsradius auf.

Der vorliegenden Erfindung liegt daher die Aufgabe zugrunde, solche aromatischen Copolyamide zu finden, die sich unter Verwendung von Amidlösungmitteln in geformte Gebilde überführen lassen, die sich dann durch eine Reihe von physikalischen Eigenschaften auszeichnen. Bei der Herstellung von Fäden und Fasern sollen nach entsprechenden Verstreckungsvorgängen hohe Festigkeiten und insbesondere rel. hohe Reißdehnungen erzielbar sein. Die für die Herstellung der Copolyamide benötigten Monomere sollen leicht zugänglich sein, die durch die Polykondensation erhaltenen Polymerlösungen sollen nach einem Filtrationsprozeß und einer entsprechenden Entlüftung direkt spinnbar bzw. formbar sein.

Die Lösung der Aufgabe wurde gefunden in neuartigen aromatischen Copolyamiden, die sich aus Lösungen in aprotischen Lösungsmitteln zu geformten Gebilden wie Fäden, Fasern, Faserpulp, Folien aber auch Filmen verarbeiten lassen. Die dafür benötigten Copolyamide weisen zu mindestens 95 Mol-% die folgenden ausschließlich para-verknüpften wiederkehrenden Struktureinheiten auf:

A - OC - Ar - CO -

sowie

B - NH - Ar'- NH -

C 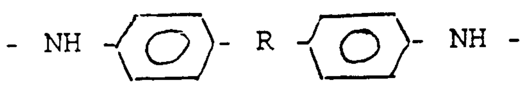

D 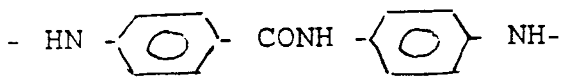

und bis zu 5 Mol-% Struktureinheiten E und/oder F, die einen aromatischen Kern enthalten, dessen in der Kette des Polymermoleküls liegende Bindungen in meta-Stellung stehen und die von aromatischen Dicarbonsäuren (E') und/oder von aromatischen Diaminen (F') abgeleitet sind, wobei die Summe der Molanteile der Struktureinheiten A + E und die Summe der Molanteile der Struktureinheiten B + C + D + F gleich groß sind.

In diesen Formeln bedeuten

-Ar- und -Ar'- zweiwertige einkernige oder kondensierte zweikernige aromatische Reste, deren Valenzbindungen in para- oder vergleichbarer koaxialer oder paralleler Stellung stehen und die durch einen oder zwei inerte Reste, wie Alkylreste mit 1-4 C-Atomen oder Halogen substituiert sein können und

-R- bedeutet einen unsubstituierten oder substituierten Methylenrest oder eine Gruppierung -O-Ar-O-, wobei -Ar- den gleichen Aufbau wie oben angegeben aufweist.

Die Valenzbindungen, die in koaxialer oder paralleler Stellung stehen, sind entgegengesetzt gerichtet. Ein Beispiel für koaxiale, entgegengesetzt gerichtete Bindungen sind die Biphenylen-4,4'-Bindungen. Ein Beispiel für parallele, entgegengesetzt gerichtete Bindungen sind z.B. die Naphthylen-1,5- oder 2,6-Bindungen, während die Naphthylen-1,8-Bindungen parallel gleichgerichtet sind.

Für -Ar- stehende zweiwertige aromatische Reste, bei denen die Valenzbindungen in para- oder vergleichbarer koaxialer oder paralleler Stellung stehen, sind ein- oder zweikernige, auch kondensierte aromatische Reste wie z.B. Phenylen-1,4, Naphthylen-1,4, Naphthylen-1,5, Naphthylen-2,6 und 1,4-Diphenylen.

Für -Ar'- stehende zweiwertige aromatische Reste, bei denen die Valenzbindungen in para- oder vergleichbarer koaxialer oder paralleler Stellung stehen sind ein- oder zweikernige kondensierte aromatische Reste wie z.B. Phenylen-1,4, Naphthylen-1,4, Naphthylen-1,5 und Naphthylen-2,6. Bevorzugt für -Ar- und Ar'- ist Phenylen-1,4.

Die Reste -Ar- und -Ar'- können ein- oder zweifach durch Niederalkylreste, das sind geradkettige oder verzweigte Alkylreste mit 1 bis 4 C-Atomen, oder durch Halogen insbesondere durch F, Cl oder Br substituiert sein.

Bevorzugte Alkylsubstituenten sind geradkettig und insbesondere kommen Methyl und Ethyl in Betracht. Bevorzugter Halogensubstituent ist Chlor.

Die erfindungsgemäßen Polyamide können die unsubstituierten Reste -Ar- und -Ar'- und die alkyl- und/oder halogensubstituierten Reste -Ar- und -Ar'- nebeneinander in wechselnden Anteilen enthalten.

Dabei kann das Polyamid eine Art oder mehrere Arten substituierter Reste -Ar- und -Ar'- enthalten; z.B. kann es ausschließlich methylsubstituierte -Ar- und/oder -Ar'-Reste enthalten, oder es kann Anteile von -Ar- und/oder -Ar'-Resten mit verschiedenen Alkylsubstituenten und/oder mit Halogensubstituenten enthalten.

Die erfindungsgemäßen Polyamide können aber auch auschließlich unsubstituierte oder substituierte Reste -Ar- und -Ar'- enthalten. Aus Kostengründen sind solche erfindungsgemäßen Polyamide bevorzugt, die nur unsubstituierte oder die bis zu ca. 30 Mol-% substituierte Reste -Ar- und -Ar'- enthalten.

m-Bindungen enthaltende Struktureinheiten E und F im Sinne der vorliegenden Erfindung sind solche, die einen aromatischen Kern enthalten, dessen in der Kette des Polymermoleküls liegende Bindungen zueinander in m-Stellung stehen.

Solche Struktureinheiten sind z.B. die Reste von Isophthalsäure, m-Phenylendiamin, 3,4'-Diaminodiphenyl oder deren Alkyl- und/oder Alkoxysubstitutionsprodukten, oder 3,4'- oder 3',4-Diaminobenzanilid.

Die aus den in das Polyamid einkondensierten Diaminen stammenden Struktureinheiten B, C und D sind in den erfindungsgemäßen aromatischen Polyamiden nur in den folgenden bestimmten Molprozentbereichen, bezogen auf die Gesamtmenge der Komponenten B, C und D, enthalten:

| | | | | | | |
|---|---|---|---|---|---|---|
| Struktureinheiten | B | 15-60 Mol-% | - | vorzugsweise | 20-55 | Mol-% |
| " | C | 30-60 " | - | " | 32,5-55 | " |
| " | D | 2,5-40 " | - | " | 5-30 | " |

Dabei beziehen sich diese Mol-%-Angaben auf die Gesamtmenge der Diamin-Struktureinheiten B, C und D.

Sie sind in der beigefügten Figur durch die Eckpunkte R, S, T, U, V, W und bevorzugt R', S', T', U', V' und W' markiert.

Die inhärente Viskosität der formbildenden Copolyamide soll zwischen 2,5 und 5,0 dl/g liegen. Sie wurde bestimmt an Lösungen von jeweils 0,5 g Polymer in 100 ml 98-gew.-%iger Schwefelsäure bei 25 °C.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Die ausgezeichneten Eigenschaften der erfindungsgemäßen geformten Gebilde beruhen auf dem Einbau der Aminbausteine B, C und D in den angegebenen Grenzen. Wie aus den weiter unten beschriebenen Vergleichsversuchen ersichtlich ist, fallen die technologischen Eigenschaften - besonders die Reißdehnung - außerhalb der angegebenen Grenzen stark ab! Filamente aus den beanspruchten Copolyamiden weisen durch weg eine hohe Verstreckbarkeit (Streckgrenze ≧ 5-fach) und eine im Vergleich zu anderen Aramiden hohe Reißdehnung auf (D ≧ 3,5 %). Aromatische Polyamide mit einzelnen der Aminkomponenten B, C oder D sind allgemein bekannt. Sie zeigen keine überragenden Eigenschaften, wie aus den folgenden Schriften und den angestellten Vergleichsversuchen ersichtlich ist.

So ist bekannt, Terephthalsäure (A) und p-Phenylendiamin-Reste (B) für Polyamide einzusetzen, z.B. aus der oben zitierten deutschen Patentschrift 22 19 703. Diese Produkte sind in Amid-Lösungsmitteln praktisch nicht mehr löslich.

Die Verwendung von Aminkomponenten der Struktur C zur Herstellung von Polyamiden ist ebenfalls mehrfach beschrieben worden. Diaminkomponenten mit einer gegebenenfalls substituierten Methylenbrücke werden bereits in der DE-C-22 19 703 genannt. Auch der Gebrauch von aromatischen Diaminen mit zwei Äthergruppen ist bereits bekannt, beispielsweise aus der DE-A-15 95 681.

Auch die Verwendung von 4,4'-Diaminobenzanilid (D) als Amidkomponente ist mehrfach beschrieben worden:

a) In USP 36 71 542, Beispiel 31 wird gezeigt, daß das Polyamid aus Terephthaloylchlorid und 4,4'-Diaminobenzanilid in Amidlösungsmitteln schwer löslich ist (vgl. hierzu auch USP 37 67 756, Beispiel 5). Aus Schwefelsäure gesponnene Filamente dieses Polymeren erreichen nur mäßige Festigkeiten und Moduli.

Nach EPA 218 269, Tabelle A und B erreicht ein aus Schwefelsäure gesponnenes Diaminobenzanilidterephthalamid erst nach thermischer Nachbehandlung hohe Festigkeit und hohen Modul. Vergleiche hierzu auch EPA 168 879.

b) Ebenfalls im USP 36 71 542 wird beschrieben, daß ein Copolyamid aus p-Phenylendiamin + 4,4'-Diaminobenzanilid (1:1) und Terephthaloylchlorid + Dibenzoylchlorid oder 2,6 Naphthaloylchlorid (1:1) in Amidlösungsmitteln innerhalb kurzer Zeit gelartig wird. Die Eigenschaften der Fäden (gesponnen aus Schwefelsäure) sind mäßig.

c) Nach Preston und Mitarb., Polymer letters 4, 1033 (1966), zitiert auch in DOS 21 44 126, Seite 1, zeigen Filamente aus 4,4'-Diaminobenzanilid-terephthalamid niedrige Festigkeiten und besonders niedrige Moduli.

Vergleiche hierzu auch:
USP 33 54 125, Beispiel 4
J. Polym. Sci 22, 855 (1969)
J. Appl. Polym. Sci 16, 3237 (1972), Seite 3239
J. Macromolek. Sci, Chem. Ed. A7, 325 (1973)
Vysokomol. Soed. Ser. B, 25 (9), 672.

d) Die Herstellung von Diaminobenzanilidterephthalamid über die Yamzaki-Reaktion (freie Säure + Diamin + Pyridin + Diphenylphosphit) ergibt nur niedrige Viskositäten: Preston und Mitarb., J. Poly,. Sci; Polym. Chem. Ed. 20, 79 (1982).

e) In J. Macromolek. Sci, Chem., A7, 325 (1973) und in Kogyo Kagaku Zassi 1968, 71 (3), 443 werden auch Copolyamide mit 3,4'-Diaminobenzanilid beschrieben.

Wie sich aus den genannten Schriften ergibt, sind die betreffenden Polyamide in Amidlösungsmitteln meist unlöslich, oder aber die aus organischen Lösungsmitteln gesponnenen Filamente weisen nur mäßige Eigenschaften auf.

Dagegen sind die Polyamide der vorliegenden Erfindung, die durch Verwendung von Gemisch der Aminkomponenten B + C + D in bestimmten Anteilen hergestellt wurden, überraschenderweise in Amid-Lösungsmitteln löslich und daraus ersponnene Filamente weisen hohe Festigkeit und einen hohen Anfangsmodul, sowie eine rel. hohe Dehnung auf.

Zur Herstellung der erfindungsgemäßen Copolyamide sind die folgenden Verbindungen geeignet:
Als Dicarbonsäurederivate der Formel

A' Cl - CO - Ar - CO - Cl

sind beispielsweise geeignet, 4,4'-Diphenylsulfondicarbonsäuredichlorid, 4,4'-Diphenyletherdicarbonsäuredichlorid, 4,4'-Diphenyldicarbonsäuredichlorid, 2,6-Naphthalindicarbonsäuredichlorid, ganz besonders aber Terephthalsäuredichlorid.

Als aromatisches Diamin der Struktur

B' $H_2N$ - Ar'- $NH_2$

eignet sich insbesondere p-Phenylendiamin.

Von der Diaminkomponente C' der Formel

C'

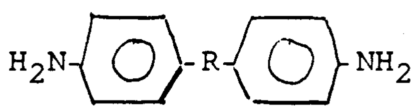

seien besonders das 4,4'-Diaminodiphenylmethan, das 2,2-Bis-(4-aminophenyl)-propan) und ganz besonders das 1,4-Bis-(4-aminophenoxy)-benzol genannt.

Die Lösungskondensation der aromatischen Dicarbonsäuredichloride mit den Mischungen aus aromatischen Diaminen erfolgt in aprotischen, polaren Lösungsmitteln vom Amidtyp, wie z.B. in N,N-Dimethylacetamid oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegeben werden. Bevorzugte Zusätze sind Calciumchlorid und/oder Lithiumchlorid.

Die Polykondensationstemperaturen liegen üblicherweise zwischen -20 °C und +120 °C, bevorzugt zwischen +10 °C und +100 °C. Besonders gute Ergebnisse werden bei Reaktionstemperaturen zwischen +10 °C und +80 °C erzielt. Die Polykondensationsreaktionen werden vorzugsweise so ausgeführt, daß nach Abschluß der Reaktion 2 bis 15, vorzugsweise 5 bis 10 Gew.-% an Polykondensat in der Lösung vorliegen. Besonders gute Ergebnisse werden bei Konzentrationen von 5,5 bis 7,0 Gew.-% erzielt.

Eine für die Weiterverarbeitung ausreichende Viskosität ist erreicht wenn die inhärente Viskosität des Polymers 2,5 bis 5,0 dl/g beträgt.

Die Polykondensation kann in üblicher Weise z.B. durch Zugabe von monofunktionellen Verbindungen, wie z.B. Acetylchlorid gestoppt werden.

Anschließend wird der entstandene und locker an das Amidlösungsmittel gebundene Chlorwasserstoff neutralisiert durch Zugabe basischer Substanzen. Geeignet sind dafür beispielsweise Lithiumhydroxyd,

Calciumhydroxyd, insbesondere aber Calciumoxid. Zur Herstellung von geformten Gebilden gemäß der vorliegenden Erfindung werden die oben beschriebenen erfindungsgemäßen Polyamidlösungen filtriert, entgast und in bekannter - hier nicht beanspruchter - Weise zu Fäden, Fasern, Faserpulp, Filmen oder auch Folien weiterverarbeitet. Dies kann beispielsweise durch Einsatz einer Naßspinnanlage erfolgen, wo die Polymerlösung durch geeignete Düsen in ein Fällbad ausgepreßt wird, die erhaltenen Fäden durch Waschbäder gezogen und bei höherer Temperatur verstreckt werden. Als Fällbäder eigenen sich wäßrige Lösungen des gleichen Amidlösungsmittels, das auch zur Polymerherstellung Verwendung gefunden hat. Es sind aber auch wäßrige Salzlösungen wie z.B. Calciumchloridlösungen verwendbar.

Bei der Herstellung von Fäden und Fasern sowie Folien setzt sich die Gesamtverstreckung zusammen aus einer geringen Naßverstreckung und einer höheren Kontaktverstreckung. Zur Kontaktverstreckung werden z.B. die Filamente über heiße Platten ("Bügeleisen") gezogen, die Oberflächentemperaturen von 350 °C bis 460 °C, bevorzugt 410 °C bis 460 °C aufweisen, und dabei im Verhältnis 1:5,0 bis ca. 1:16, bevorzugt 1:5,5 bis 1:15, verstreckt.

Eine ebenfalls geeignete Variante des Spinnverfahrens ist das sogenannte "Trockendüsen-Naßspinnverfahren", wie es beispielsweise in der US-A-34 14 645 beschrieben ist. Dort wird von oben nach unten gesponnen und die Spinnfäden passieren nach dem Austritt aus der Düse zunächst ein gasförmiges Medium, vorzugsweise Luft, und treten danach in ein wäßriges Koagulationbad ein. Die weitere Behandlung der so erzeugten Fäden erfolgt wie oben beschrieben. Die aus den erfindungsgemäßen Rohstoffen hergestellten Formkörper, wie z.B. Fasern, Filamente, Faserpulp oder Folien, dienen beispielsweise als Verstärkungsmaterialien für Kunststoff bzw. als technische Materialien für Filtration und Isolation. Für Isolationszwecke ist es auch möglich, eine Polymerlösung auf einen anderen Körper als Film aufzutragen und dann eine Entfernung des Lösungsmittels und der gegebenenfalls anwesenden Lösungsvermittler vorzunehmen.

Zur weiteren Verdeutlichung der Erfindung sollen die nachfolgenden Beispiele dienen. Die Anteile an Dicarbonsäurekomponenten und Diaminokomponenten wurden jeweils zu 100 Mol-% berechnet. Die inhärenten Viskositäten wurden wie bereits oben angegeben bestimmt.

**Beispiel 1**

Aromatisches Polyamid aus 100 Mol-% Terephthaloylchlorid, 50 Mol-% 1,4-Bis-(4'-aminophenoxy)-benzol, 25 Mol-% p-Phenylendiamin und 25 Mol-% 4,4'-Diamino-benzanilid.

58,5 g (0,2 Mol) 1,4-Bis-(4'-aminophenoxy)-benzol, 10,8 g (0,1 Mol) p-Phenylendiamin, 22,7 g (0,1 Mol) 4,4'-Diaminobenzanilid und 11,0 g trockenes Lithiumchlorid werden unter Stickstoff in 2200 g N-Methylpyrrolidon gelöst und zwischen 0 °C und 69 °C innerhalb von 90 Min. mit 82,2 g gepulvertem Terephthaloylchlorid umgesetzt.

Man neutralisiert mit 24,5 g Calziumoxid (96-prozentig) und rührt 20 Min. bei ca. 80 °C nach.

Die Lösung enthält 6 % Copolyamid, 1,85 % Calziumchlorid und 0,46 % Lithiumchlorid. Die inhärente Viscosität des gelösten Polyamids beträgt 3,49 dl/g.

Die Lösung wird filtriert, entgast und nach einem Naßspinnverfahren versponnen. Dazu wird sie aus einer Düse mit 50 Öffnungen von je 0,1 mm Durchmesser in ein waagrecht angeordnetes Koagulationsbad, bestehend aus einer 80 °C warmen Lösung von 22 % N-Methylpyrrolidon in Wasser mit einer Geschwindigkeit von 8,9 m/Min. ausgesponnen. Der Faden durchläuft Waschbäder, Trockengaletten (180 °C) und schließlich vier Bügeleisen mit einer Oberflächentemperatur von 410 °C und wird mit 105 m/Min. abgezogen. Das Multifilamentgarn wird hier und in den folgenden Beispielen mit einem Schutzdrall entsprechend $\alpha m$ = 30 (DIN 53 832, Teil 1) versehen und anschließend geprüft. Bei diesem Beispiel beträgt der Einzelfilamenttiter 0,78 dtex (DIN 53830) die feinheitsbezogene Höchstzugkraft beträgt 174 cN/tex bei einer Höchstzugkraftdehnung von 4,4 % (DIN 53 834, Teil 1). Der Modul beträgt 39,1 N/dtex. Der Modul wird aus der Steigung des feinheitsbezogenen Kraft-Dehnungsdiagramm zwischen 0,3 und 0,5 % Dehnung errechnet.

**Beispiele 2 bis 9**

Analog Beispiel 1, jedoch unter den in Tabelle 1 angegebenen Reaktionsbedingungen und unter Einsatz der dort genannten Ausgangsmaterialien können weitere erfindungsgemäße aromatische Polyamide hergestellt werden.

Die so erhaltenen Polyamide mit unterschiedlichen Zusammensetzungen bezüglich der Diamin-Struktureinheiten B, C und D können anschließend analog Beispiel 1 direkt aus der Reaktionslösung versponnen und verstreckt werden.

Die Spinn- und Streckbedingungen sowie die Eigenschaften der so erhaltenen Filamente sind ebenfalls aus der Tabelle 1 ersichtlich.

In der Tabelle 1 werden folgende Abkürzungen verwendet: TPC = Terephthaloylchlorid; PPD = p-Phenylendiamin; DABA = 4,4'-Diaminobenzanilid; DADPM = 4,4'-Diaminodiphenylmethan; BAPOB = 1,4-Bis-(4'-aminophenoxy)-benzol; NMP = N-Methylpyrrolidon; N = Naßspinnen; TN = Trocken-Naßspinnen.

Tabelle 1

| **Beispiel** | | 2 | 3 | 4 | 5 | 6 | 7 | 8 | 9 |
|---|---|---|---|---|---|---|---|---|---|
| **Polymer** | | | | | | | | | |
| PPD | Mol | 0,15 | 0,90 | 0,20 | 0,3 | 1,35 | 1,35 | 1,12 | 0,10 |
| | Mol-% | 37,5 | 37,5 | 50 | 50 | 45 | 45 | 40 | 25 |
| | g | 16,2 | 97,3 | 21,6 | 32,4 | 145,9 | 145,9 | 121,1 | 10,8 |
| DABA | Mol | 0,10 | 0,60 | 0,05 | 0,06 | 0,45 | 0,375 | 0,42 | 0,1 |
| | Mol-% | 25 | 25 | 12,5 | 10 | 15 | 12,5 | 15 | 25 |
| | g | 22,7 | 136,4 | 11,4 | 13,6 | 102,3 | 85,2 | 95,4 | 22,7 |
| DADPM | Mol | | | | 0,24 | 1,2 | 1,275 | 1,26 | 0,20 |
| | Mol-% | | | | 40 | 40 | 42,5 | 45 | 50 |
| | g | | | | 47,6 | 237,9 | 252,8 | 249,8 | 39,65 |
| BAPOB | Mol | 0,15 | 0,90 | 0,15 | | | | | |
| | Mol-% | 37,5 | 37,5 | 37,5 | | | | | |
| | g | 43,8 | 263,1 | 43,8 | | | | | |
| Salz g | | 10,3 LiCl | 80,8 $CaCl_2$ | 10,8 LiCl | 13,1 LiCl | | | | 9,5 LiCl |
| NMP g | | 2056 | 12315 | 2165 | 2606 | 13391 | 12149 | 13871 | 1905 |
| TPC g | | 82,0 | 485,8 | 82,0 | 123,8 | 608,5 | 609,1 | 568,5 | 81,8 |
| Reaktionszeit Min. | | 75 | 35 | 70 | 41 | 35 | 24 | 31 | 75 |
| Reaktionstemp. °C | | 10-72 | 30,6-57,4 | 10-70 | 32,5-60 | 30,2-54,6 | 31-57,1 | 30,4-56,6 | 10-68 |
| Acetylchlorid g | | / | 3,8 | / | / | 4,7 | 4,7 | 4,4 | / |
| CaO 96 % g | | 24,5 | 222[1)] | 24,5 | 36,5 | 278[1)] | 278[1)] | 259[1)] | 24,5 |
| Polymerkonz. % | | 6,0 | 6,0 | 5,48 | 6,0 | 6,0 | 6,54 | 5,53 | 6,0 |
| Salzkonz. % | | 2,0 $CaCl_2$ + 0,46 LiCl | 2,58 $CaCl_2$ | 1,89 $CaCl_2$ + 0,46 LiCl | 2,33 $CaCl_2$ + 0,46 LiCl | 2,28 $CaCl_2$ | 2,49 $CaCl_2$ | 2,07 $CaCl_2$ | 2,13 $CaCl_2$ + 0,46 LiCl |
| Polymervis. $\eta$ inh dl/g | | 3,48 | 3,86 | 4,61 | 3,34 | 4,59 | 4,30 | 4,62 | 2,98 |

Forsetzung von Tabelle 1

| Beispiel | 2 | 3 | 4 | 5 | 6 | 7 | 8 | 9 |
|---|---|---|---|---|---|---|---|---|
| **Spinnen und Strecken** | | | | | | | | |
| Verfahren | N | TN | N | N | TN | TN | TN | N |
| Temp. Spinnlösung °C | 95 | 90 | 95 | 95 | 100 | 130 | 130 | 85 |
| Düsen-Lochzahl | 50 | 100 | 50 | 50 | 50 | 100 | 100 | 50 |
| Düsen-Lochdurchmesser mm | 0,10 | 0,15 | 0,10 | 0,10 | 0,10 | 0,15 | 0,15 | 0,10 |
| Abstand Düse-Fällbad mm | / | 40 | / | / | 40 | 40 | 40 | / |
| Fällbad-zusammensetzung % NMP | 35 | 35 | 35 | 35 | 35 | 35 | 35 | 35 |
| Fällbad-Temp. °C | 60 | 60 | 60 | 60 | 80 | 80 | 80 | 60 |
| Abzugsgeschwindigkeit m/Min. | 8,9 | 16 | 8,3 | 15,7 | 16 | 16 | 16 | 8,2 |
| Trockengalettentemp. °C | 180 | 120<br>160<br>240 | 180 | 160<br>180 | 120<br>240 | 120<br>240 | 120<br>240 | 180 |

1) 65 Proz. Suspension von 96 %igen CaO in NMP

Forsetzung von Tabelle 1

| Beispiel | 2 | 3 | 4 | 5 | 6 | 7 | 8 | 9 |
|---|---|---|---|---|---|---|---|---|
| Bügeleisen-temp. °C | 430 | 460 | 410 | 440 | 410 | 390-410 | 410-430 | 350 |
| Abzugsgeschwindigkeit m/Min. | 85,7 | 100,8 | 64,9 | 110 | 90,3 | 91,2 | 111,2 | 45,5 |

**Filamenteigenschaften**

| | | | | | | | | |
|---|---|---|---|---|---|---|---|---|
| Einzeltiter dtex | 1,14 | 2,25 | 1,16 | 1,28 | 2,4 | 2,76 | 1,97 | 0,96 |
| Feinheits-Festigkeit cN/tex | 163 | 185 | 147 | 108 | 114 | 122 | 115 | 110 |
| Dehnung % | 3,7 | 4,1 | 3,7 | 4,2 | 4,2 | 4,9 | 5,0 | 5,5 |
| Anfangsmodul N/tex | 46,8 | 40 | 43,3 | 31,8 | 29 | 24 | 24 | 25,4 |

**Vergleichsbeispiele 1 bis 6**

Analog Beispiel 1, jedoch unter den in Tabelle 2 angegebenen Reaktionsbedingungen und unter Einsatz der dort genannten Ausgangsmaterialien wurden weitere aromatischen Polyamide hergestellt.

Die so erhaltenen Polyamide mit unterschiedlichen Zusammensetzungen bezüglich der Diamin-Struktureinheiten B, C und D wurden anschließend analog Beispiel 1 direkt aus der Reaktionslösung versponnen und verstreckt.

Die Spinn- und Streckbedingungen sowie die Eigenschaften der so erhaltenenen Filamente sind ebenfalls aus der Tabelle 2 ersichtlich.

In der Tabelle 2 werden die gleichen Abkürzungen verwendet wie in Tabelle 1.

Tabelle 2

Vergleichsbeispiele

| **Vergleichsbeispiel** | | 1 | 2 | 3 | 4 | 5 | 6 |
|---|---|---|---|---|---|---|---|
| **Polymer** | | | | | | | |
| PPD | Mol | 0,08 | 0,075 | 0,20 | 0,15 | 0,16 | 0,10 |
| | Mol-% | 20 | 25 | 50 | 37,5 | 40 | 25 |
| | g | 8,65 | 8,1 | 21,6 | 16,2 | 17,3 | 10,8 |
| DABA | Mol | 0,2 | 0,15 | 0,1 | 0,15 | 0,12 | 0,20 |
| | Mol-% | 50 | 50 | 25 | 37,5 | 30 | 50 |
| | g | 45,45 | 34,1 | 22,7 | 34,1 | 27,3 | 45,45 |
| DADPM | Mol | | | | | | 0,10 |
| | Mol-% | | | | | | 25 |
| | g | | | | | | 19,8 |

Forsetzung von Tabelle 2

| Vergleichs-beispiel | 1 | 2 | 3 | 4 | 5 | 6 |
|---|---|---|---|---|---|---|
| BAPOB Mol | 0,12 | 0,075 | 0,1 | 0,1 | 0,12 | |
| Mol-% | 30 | 25 | 25 | 25 | 30 | |
| g | 35,1 | 21,9 | 29,2 | 29,2 | 35,1 | |
| Salz g | 10,8 LiCl | 12,4 LiCl | 9,6 LiCl | 10,0 LiCl | 10,1 LiCl | 9,8 $CaCl_2$ + 9,8 LiCl |
| NMP g | 2156 | 2326 | 2113 | 2005 | 2007 | 1941 |
| Reaktions-zeit Min. | 45 | 50 | 75 | 60 | 75 | 105 |
| Reaktions-temp. °C | 11-64 | 10-70 | 10-74 | 10-74 | 10-70 | 8-69 |
| CaO 96 % g | 24,5 | 18,4 | 24,5 | 24,5 | 24,5 | 24,5 |
| Polymerkonz. % | 6,0 | 4,0 | 5,47 | 6,0 | 6,0 | 6,0 |
| Salzkonz. % | 1,89 $CaCl_2$ + 0,46 LiCl | 1,35 $CaCl_2$ +0,5 LiCl | 1,94 $CaCl_2$ + 0,42 LiCl | 2,03 $CaCl_2$ + 0,46 LiCl | 2,02 $CaCl_2$ + 0,46 LiCl | 254 $CaCl_2$ + 0,46 LiCl |
| Polymervis. $\eta$ inh dl/g | 4,48 | 4,62 | 4,16 | 4,69 | 3,13 | 2,12 |
| **Spinnen und Strecken** | | | | | | |
| Verfahren | N | N | N | N | N | N |
| Temp. Spinn-lösung °C | 85 | 80 | 98 | 85 | 100 | 75 |
| Düsen-Loch-zahl | 50 | 50 | 50 | 50 | 50 | 50 |
| Düsen-Loch-durchmesser mm | 0,10 | 0,10 | 0,10 | 0,10 | 0,10 | 0,10 |
| Abstand Düse-Fäll-bad mm | / | / | / | / | / | / |

Forsetzung von Tabelle 2

| **Vergleichsbeispiel** | **1** | **2** | **3** | **4** | **5** | **6** |
|---|---|---|---|---|---|---|
| Fällbadzusammensetzung % NMP | 35 | 35 | 35 | 35 | 35 | 35 |
| Fällbad-Temp. °C | 60 | 60 | 60 | 60 | 60 | 40 |
| Abzugsgeschwindigkeit m/Min. | 8,1 | 16,1 | 8,3 | 8,2 | 8,1 | 8,2 |
| Trockengalettentemp. °C | 180 | 160<br>180<br>250 | 180 | 180 | 180 | 180 |
| Bügeleisentemp. °C | 470 | 350-440 | 440 | 450 | 450 | 483 |
| Abzugsgeschwindigkeit m/Min. | 30,6 | 40,0 | 27,0 | 22,1 | 35,0 | 20,8 |
| **Filamenteigenschaften** | | | | | | |
| Einzeltiter dtex | 0,8 | 4,38 | 2,78 | 2,24 | 0,72 | 4,14 |
| Feinheitsfestigkeit cN/tex | 98 | 62 | 71 | 88 | 117 | 40 |
| Dehnung % | 2,1 | 2,5 | 2,5 | 2,4 | 2,7 | 1,6 |
| Anfangsmodul N/tex | 43,3 | | | | 48,0 | 35,8 |

Die Vergleichsversuche zeigen, daß aromatische Polyamide, deren Zusammenseztung außerhalb der erfindungsgemäßen Bereiche liegen, zwar ebenfalls zu Filamenten versponnen werden können, daß dabei aber nicht die ausgezeichneten mechanischen Eigenschaften - besonders die rel.-hohen Dehnungen - der erfindungsgemäßen Filamente erreicht werden können.

**Patentansprüche**

**Patentansprüche für folgende Vertragsstaaten : AT, BE, CH, DE, DK, FR, GB, GR, IT, LI, LU, NL**

**1.** Aromatisches Copolyamid, löslich in organischen Polyamid-Lösemitteln dadurch gekennzeichnet, daß es zu mindestens 95 Mol-% die wiederkehrenden Struktureinheiten der Formeln

A - OC - Ar - CO -

sowie

B - NH - Ar'- NH -

C 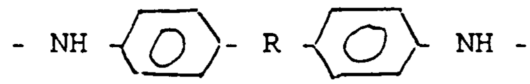

D 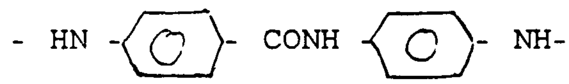

und bis zu 5 Mol-% Struktureinheiten E und/oder F, die einen aromatischen Kern enthalten, dessen in der Kette des Polymermoleküls liegende Bindungen zueinander in meta-Stellung stehen und die von aromatischen Dicarbonsäuren (E') und/oder von aromatischen Diaminen (F') abgeleitet sind, wobei die Summen der Molanteile der Struktureinheiten A + E und der Molanteil der Struktureinheiten B + C + D + F gleich groß sind,
-Ar- und -Ar'- zweiwertige einkernige oder kondensierte zweikernige aromatische Reste sind, deren Valenzbindungen in para- oder vergleichbarer koaxialer oder paralleler Stellung stehen und die durch einen oder zwei inerte Reste, wie Alkylreste mit 1-4 C-Atomen oder Halogen substituiert sein können,
-R- einen unsubstituierten oder substituierten Methylenrest oder eine Gruppierung -O-Ar-O-, wobei -Ar- den gleichen Aufbau wie oben angegeben hat, bedeuten und die Anteile der Diaminkomponenten B, C, und D zur Gesamtmenge der Diamin - Komponenten B, C und D in Mol-% innerhalb eines Bereiches liegen, der durch die folgenden Eckpunkte definiert ist (vgl. Abbildung):

| | | | |
|---|---|---|---|
| Punkt | R | entspricht | 15 % B; 45 % C; 40 % D |
| " | S | " | 30 % B; 30 % C, 40 % D |
| " | T | " | 60 % B; 30 % C; 10 % D |
| " | U | " | 60 % B; 37,5 % C; 2,5 % D |
| " | V | " | 37,5 % B; 60 % C; 2,5 % D |
| " | W | " | 15 % B; 60 % C; 25 % D |

und das Copolyamid eine inhärente Viscosität von etwa 2,5-5,0 dl/g (gemessen an Lösungen von 0,5 g Polyamid in 100 ml 98-gew.-%iger Schwefelsäure bei 25 °C) hat.

2. Aromatisches Copolyamid nach Anspruch 1, dadurch gekennzeichnet, daß - Ar - und - Ar' - jeweils einen 1,4-Phenylenrest bedeuten.

3. Aromatisches Copolyamid nach einem der vorhergehenden Ansprüche, dadurch gekennzeichnet, daß - R - die Bedeutung - $CH_2$ - hat.

4. Aromatisches Copolyamid nach einem der Ansprüche 1 oder 2, dadurch gekennzeichnet, daß - R - die Bedeutung

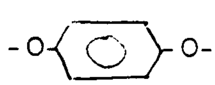

hat.

**5.** Aromatisches Copolyamid nach einem der vorhergehenden Ansprüche, dadurch gekennzeichnet, daß die Anteile der Diaminkomponenten B, C und D zur Gesamtmenge an Diaminkomponenten in Mol-% innerhalb eines Bereiches liegen, der durch die folgenden Eckpunkte definiert ist (vgl. Abbildung):

| | | | |
|---|---|---|---|
| Punkt | R' | entspricht | 20 % B; 50 % C; 30 % D |
| " | S' | " | 37,5 % B; 32,5 % C; 30 % D |
| " | T' | " | 55 % B; 32,5 % C; 12,5 % D |
| " | U' | " | 55 % B; 40 % C; 5 % D |
| " | V' | " | 40 % B; 55 % C; 5 % D |
| " | W' | " | 20 % b; 55 % C; 25 % D |

**6.** Aromatisches Copolyamid gemäß mindestens einem der Ansprüche 1-5, dadurch gekennzeichnet, daß die m-Bindungen enthaltende Struktureinheit der zweiwertige Rest der Isophthalsäure und/oder des m-Phenylendiamins bzw. des 3,4'- oder 3',4-Diaminobenzanilids ist.

**7.** Verfahren zur Herstellung der aromatischen Copolyamide des Anspruchs 1, durch Polykondensation eines Dicarbonsäurechlorids mit aromatischen Diaminen in einem bekannten Polyamid-Lösemittel, gegebenenfalls in Gegenwart eines Alkali- oder Erdalkalihalogenids bei Temperaturen von -20 °C bis 120 °C, dadurch gekennzeichnet, daß man 95 bis 100 Mol-% Säurechloride der Formel

Cl-OC-Ar-CO-Cl (A')

und 0 bis 5 Mol-% m-Bindungen enthaltende aromatische Dicarbonsäure-dichloride (E') mit einer äquivalenten Menge einer Diaminmischung, die sich zusammensetzt aus 95-100 Mol-% eines Gemisches von Diaminen, bestehend aus 15-60 Mol-% Diaminen der Formel

$NH_2$-Ar'-$NH_2$ (B')

30-60 Mol-% Diaminen der Formel

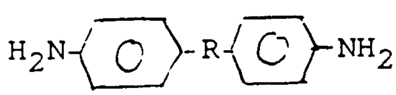

(C')

und
2,5-40 Mol-% 4,4'-Diamino-benzanilid (D') und aus 0 bis 5 Mol-% von m-Bindungen enthaltenden Diaminen (F') umsetzt, wobei -Ar-, -Ar'- und -R- die oben angegebene Bedeutung haben.

**8.** Geformte Gebilde, wie Fäden, Fasern, Faserpulp, Filme und Folien, dadurch gekennzeichnet, daß sie aus einem aromatischen Polyamid des Anspruchs 1 bestehen.

**Patentansprüche für folgenden Vertragsstaat : ES**

**1.** Geformte Gebilde, wie Fäden, Fasern, Faserpulp, Filme und Folien, aus aromatischen Copolyamiden, die löslich in organischen Polyamid-Lösemitteln sind, dadurch gekennzeichnet, daß die aromatischen Copolyamide zu mindestens 95 Mol-% die wiederkehrenden Struktureinheiten der Formeln

A - OC - Ar - CO -

sowie

B - NH - Ar'- NH -

C

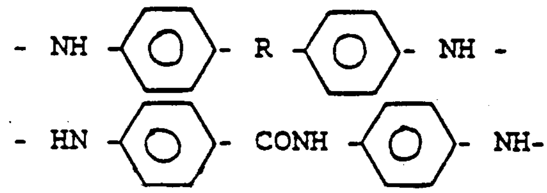

D

und bis zu 5 Mol-% Struktureinheiten E und/oder F, die einen aromatischen Kern enthalten, dessen in der Kette dis Polymermoleküls liegende Bindungen zueinander in meta-Stellung stehen und die von und bis zu 5 Mol-% von aromatischen Dicarbonsäuren (E') und/oder von aromatischen Diaminen (F') abgeleitet sind wobei die Summen der Molanteile der Struktureinheiten A + E und der Molanteil der Struktureinheiten B + C + D + F gleich groß sind,
-Ar- und -Ar'- zweiwertige einkernige oder kondensierte zweikernige aromatische Reste sind, deren Valenzbindungen in para- oder vergleichbarer koaxialer oder paralleler Stellung stehen und die durch einen oder zwei inerte Reste, wie Alkylreste mit 1-4 C-Atomen oder Halogen substituiert sein können,
-R- einen unsubstituierten oder substituierten Methylenrest oder eine Gruppierung -O-Ar-O-, wobei -Ar- den gleichen Aufbau wie oben angegeben hat, bedeuten und die Anteile der Diaminkomponenten B, C, und D zur Gesamtmenge der Diamin - Komponenten B, C und D in Mol-% innerhalb eines Bereiches liegen,der durch die folgenden Eckpunkte definiert ist (vgl. Abbildung):

| | | | |
|---|---|---|---|
| Punkt | R | entspricht | 15 % B; 45 % C; 40 % D |
| " | S | " | 30 % B; 30 % C, 40 % D |
| " | T | " | 60 % B; 30 % C; 10 % D |
| " | U | " | 60 % B; 37,5 % C; 2,5 % D |
| " | V | " | 37,5 % B; 60 % C; 2,5 % D |
| " | W | " | 15 % B; 60 % C; 25 % D |

und das Copolyamid eine inhärente Viscosität von etwa 2,5-5,0 dl/g (gemessen an Lösungen von 0,5 g Polyamid in 100 ml 98-gew.-%iger Schwefelsäure bei 25 °C) hat.

2. Geformte Gebilde nach Anspruch 1, dadurch gekennzeichnet, daß - Ar - und - Ar' - jeweils einen 1,4-Phenylenrest bedeuten.

3. Geformte Gebilde nach einem der vorhergehenden Ansprüche, dadurch gekennzeichnet, daß - R - die Bedeutung - $CH_2$ - hat.

4. Geformte Gebilde nach einem der Ansprüche 1 oder 2, dadurch gekennzeichnet, daß - R - die Bedeutung

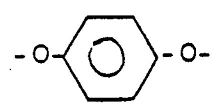

hat.

5. Geformte Gebilde nach einem der vorhergehenden Ansprüche, dadurch gekennzeichnet, daß die Anteile der Diaminkomponenten B, C und D zur Gesamtmenge an Diaminkomponenten in Mol-% innerhalb eines Bereiches liegen, der durch die folgenden Eckpunkte definiert ist (vgl. Abbildung):

| | | | |
|---|---|---|---|
| Punkt | R' | entspricht | 20 % B; 50 % C; 30 % D |
| " | S' | " | 37,5 % B; 32,5 % C; 30 % D |
| " | T' | " | 55 % B; 32,5 % C; 12,5 % D |
| " | U' | " | 55 % B; 40 % C; 5 % D |
| " | V' | " | 40 % B; 55 % C; 5 % D |
| " | W' | " | 20 % b; 55 % C; 25 % D |

6. Geformte Gebilde gemäß mindestens einem der Ansprüche 1-5, dadurch gekennzeichnet, daß die m-Bindungen enthaltende Struktureinheit der zweiwertige Rest der Isophthalsäure und/oder des m-Phenylendiamins bzw. des 3,4'- oder 3',4-Diaminobenzanilids ist.

7. Verfahren zur Herstellung der aromatischen Copolyamide des Anspruchs 1, durch Polykondensation eines Dicarbonsäurechlorids mit aromatischen Diaminen in einem bekannten Polyamid-Lösemittel, gegebenenfalls in Gegenwart eines Alkali- oder Erdalkalihalogenids bei Temperaturen von -20 ° C bis 120 ° C dadurch gekennzeichnet, daß man 95 bis 100 Mol-% Säurechloride der Formel

Cl-OC-Ar-CO-Cl (A')

und 0 bis 5 Mol-% m-Bindungen enthaltende aromatische Dicarbonsäure-dichloride (E') mit einer äquivalenten Menge einer Diaminmischung, die sich zusammensetzt aus 95-100 Mol-% eines Gemisches von Diaminen, bestehend aus 15-60 Mol-% Diaminen der Formel

$NH_2$-Ar'-$NH_2$ (B')

30-60 Mol-% Diaminen der Formel

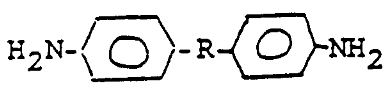

(C')

und
2,5-40 Mol-% 4,4'-Diamino-benzanilid (D') und aus 0 bis 5 Mol-% von m-Bindungen enthaltenden Diaminen (F') umsetzt, wobei -Ar-, -Ar'- und -R- die in Anspruch 1 angegebene Bedeutung haben.

8. Verfahren nach Anspruch 7, dadurch gekennzeichnet, daß - Ar - und - Ar' - jeweils einen 1,4-Phenylenrest bedeuten.

9. Verfahren nach einem der Ansprüche 7 und 8, dadurch gekennzeichnet, daß - R - die Bedeutung -$CH_2$-hat.

10. Verfahren nach einem der Ansprüche 7 oder 8, dadurch gekennzeichnet, daß - R - die Bedeutung

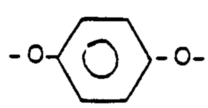

hat.

11. Verfahren nach einem der Ansprüche 7, 8, 9 oder 10, dadurch gekennzeichnet, daß die Anteile der Diaminkomponenten B, C und D zur Gesamtmenge an Diaminkomponenten in Mol-% innerhalb eines Bereiches liegen, der durch die folgenden Eckpunkte definiert ist (vgl. Abbildung):

| | | | |
|---|---|---|---|
| Punkt | R' | entspricht | 20 % B; 50 % C; 30 % D |
| " | S' | " | 37,5 % B; 32,5 % C; 30 % D |
| " | T' | " | 55 % B; 32,5 % C; 12,5 % D |
| " | U' | " | 55 % B; 40 % C; 5 % D |
| " | V' | " | 40 % B; 55 % C; 5 % D |
| " | W' | " | 20 % b; 55 % C; 25 % D. |

**12.** Verfahren gemäß einem der Ansprüche 7, 8, 9, 10 oder 11, dadurch gekennzeichnet, daß die m-Bindungen enthaltende Struktureinheit der zweiwertige Rest der Isophthalsäure und/oder des m-Phenylendiamins bzw. des 3,4'- oder 3',4-Diaminobenzanilids ist.

**Claims**
**Claims for the following Contracting States : AT, BE, CH, DE, DK, FR, GB, GR, IT, LI, LU, NL**

**1.** An aromatic copolyamide which is soluble in organic solvents for polyamides, comprising at least 95 mol % of recurring structural units of formulae

A - OC - Ar - CO -

and

B - NH - Ar'- NH -

C 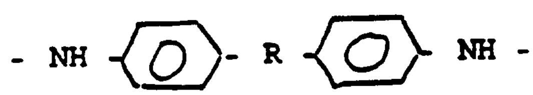

D 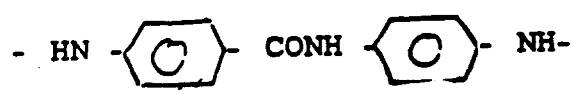

and up to 5 mol % of structural units E and/or F which comprise an aromatic ring system whose bonds lying in the chain of the polymer molecule are meta to one another, and which are derived from aromatic dicarboxylic acids (E') and/or from aromatic diamines (F'), the sum total of the mole fractions of structural units A + E and the sum total of mole fractions of structural units B + C + D + F being of equal magnitude,
-Ar- and -Ar'- are divalent monocyclic or fused bicyclic aromatic radicals whose valence bonds are in a para or similar coaxial or parallel position and which may be substituted by one or two inert radicals, such as alkyl of 1-4 carbon atoms or halogen, and
-R- is an unsubstituted or substituted methylene radical or a grouping -O-Ar-O-, where -Ar- has the same structure as indicated above, and the proportions of the diamine components B, C and D relative to the total amount of the diamine components B, C and D in mol % are within an area which is defined by the following cornerpoints (cf. figure):
Point R corresponds to 15% of B, 45% of C and 40% of D
Point S corresponds to 30% of B, 30% of C and 40% of D
Point T corresponds to 60% of B, 30% of C and 10% of D
Point U corresponds to 60% of B, 37.5% of C and 2.5% of D
Point V corresponds to 37.5% of B, 60% of C and 2.5% of D
Point W corresponds to 15% of B, 60% of C and 25% of D
and the copolyamide has an inherent viscosity of about 2.5-5.0 dl/g (measured in solutions of 0.5 g of polyamide in 100 ml of 98% strength by weight sulfuric acid at 25 °C).

**2.** An aromatic copolyamide as claimed in claim 1, wherein - Ar - and - Ar' - are each 1,4-phenylene.

**3.** An aromatic copolyamide as claimed in either of the preceding claims, wherein - R - is - $CH_2$ -.

**4.** An aromatic copolyamide as claimed in either of claims 1 and 2, wherein -R- is

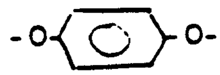

**5.** An aromatic copolyamide as claimed in any one of the preceding claims, wherein the proportions of the diamine components B, C and D relative to the total amount of diamine components in mol % are within an area which is defined by the following cornerpoints (cf. figure):
Point R' corresponds to 20% of B, 50% of C and 30% of D
Point S' corresponds to 37.5% of B, 32.5% of C and 30% of D
Point T' corresponds to 55% of B, 32.5% of C and 12.5% of D
Point U' corresponds to 55% of B, 40% of C and 5% of D
Point V' corresponds to 40% of B, 55% of C and 5% of D
Point W' corresponds to 20% of B, 55% of C and 25% of D.

**6.** An aromatic copolyamide as claimed in at least one of claims 1-5, wherein the structural unit containing m-bonds is the divalent radical of isophthalic acid and/or of m-phenylenediamine or of 3,4'- or 3',4-diaminobenzanilide.

**7.** A process for producing the aromatic copolyamide of claim 1 by polycondensation of a dicarbonyl chloride with an aromatic diamine in a known solvent for polyamide in the presence or absence of an alkali metal or alkaline earth metal halide at temperatures of from -20 °C to 120 °C, which comprises reacting from 95 to 100 mol % of an acid chloride of the formula

Cl-OC-Ar-CO-Cl (A')

and from 0 to 5 mol % of an aromatic dicarbonyl dichloride (E') which has meta bonds with an equivalent amount of a diamine mixture which is composed of 95-100 mol % of a mixture of diamines consisting of 15-60 mol % of diamines of the formula

$NH_2$-Ar'-$NH_2$ (B'),

30-60 mol % of diamines of the formula

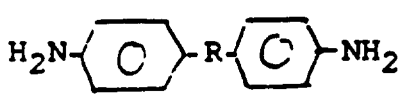

(C')

and
2.5-40 mol % of 4,4'-diaminobenzanilide (D') and of 0-5 mol % of diamines (F') which contain meta bonds, where -Ar-, -Ar'- and -R- are each as defined above.

**8.** A formed structure, such as filaments, fibers, fiber pulp, films and sheets, comprising an aromatic polyamide of claim 1.

**Claims for the Contracting State: ES**

**1.** A formed structure, such as filaments, fibers, fiber pulp, films and sheets, comprising an aromatic copolyamide which is soluble in organic solvents for polyamides, said aromatic copolyamide comprising at least 95 mol % of recurring structural units of formulae

A - OC - Ar - CO -

and

B - NH - Ar'- NH -

C 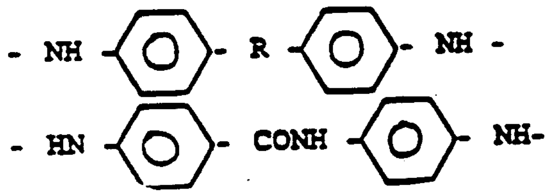

D

and up to 5 mol % of structural units E and/or F which comprise an aromatic ring system whose bonds lying in the chain of the polymer molecule are meta to one another, and which are derived from aromatic dicarboxylic acids (E') and/or from aromatic diamines (F'), the sum total of the mole fractions of structural units A + E and the sum total of mole fractions of structural units B + C + D + F being of equal magnitude,

-Ar- and -Ar'- are divalent monocyclic or fused bicyclic aromatic radicals whose valence bonds are in a para or similar coaxial or parallel position and which may be substituted by one or two inert radicals, such as alkyl of 1-4 carbon atoms or halogen, and

-R- is an unsubstituted or substituted methylene radical or a grouping -O-Ar-O-, where -Ar- has the same structure as indicated above, and the proportions of the diamine components B, C and D relative to the total amount of the diamine components B, C and D in mol % are within an area which is defined by the following cornerpoints (cf. figure):

Point R corresponds to 15% of B, 45% of C and 40% of D
Point S corresponds to 30% of B, 30% of C and 40% of D
Point T corresponds to 60% of B, 30% of C and 10% of D
Point U corresponds to 60% of B, 37.5% of C and 2.5% of D
Point V corresponds to 37.5% of B, 60% of C and 2.5% of D
Point W corresponds to 15% of B, 60% of C and 25% of D

and the copolyamide has an inherent viscosity of about 2.5-5.0 dl/g (measured in solutions of 0.5 g of polyamide in 100 ml of 98% strength by weight sulfuric acid at 25 ° C).

2. A formed structure as claimed in claim 1, wherein - Ar - and - Ar' - are each 1,4-phenylene.

3. A formed structure as claimed in either of the preceding claims, wherein - R - is - $CH_2$ -.

4. A formed structure as claimed in either of claims 1 and 2, wherein - R - is

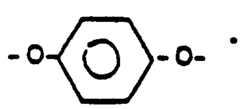

5. A formed structure as claimed in any one of the preceding claims, wherein the proportions of the diamine components B, C and D relative to the total amount of diamine components in mol % are within an area which is defined by the following cornerpoints (cf. figure):

Point R' corresponds to 20% of B, 50% of C and 30% of D
Point S' corresponds to 37.5% of B, 32.5% of C and 30% of D
Point T' corresponds to 55% of B, 32.5% of C and 12.5% of D
Point U' corresponds to 55% of B, 40% of C and 5% of D
Point V' corresponds to 40% of B, 55% of C and 5% of D
Point W' corresponds to 20% of B, 55% of C and 25% of D.

6. A formed structure as claimed in at least one of claims 1-5, wherein the structural unit containing m-bonds is the divalent radical of isophthalic acid and/or of m-phenylenediamine or of 3,4'- or 3',4-diaminobenzanilide.

**7.** A process for producing the aromatic copolyamide of claim 1 by polycondensation of a dicarbonyl chloride with an aromatic diamine in a known solvent for polyamide in the presence or absence of an alkali metal or alkaline earth metal halide at temperatures of from -20 °C to 120 °C, which comprises reacting from 95 to 100 mol % of an acid chloride of the formula

Cl-OC-Ar-CO-Cl (A')

and from 0 to 5 mol % of an aromatic dicarbonyl dichloride (E') which has meta bonds with an equivalent amount of a diamine mixture which is composed of 95-100 mol % of a mixture of diamines consisting of 15-60 mol % of diamines of the formula

$NH_2$-Ar'-$NH_2$ (B'),

30-60 mol % of diamines of the formula

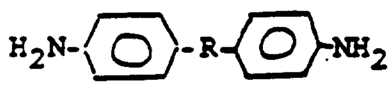

(C')

and
2.5-40 mol % of 4,4'-diaminobenzanilide (D') and of 0-5 mol % of diamines (F') which contain meta bonds, where -Ar-, -Ar'- and -R- are each as defined in claim 1.

**8.** The process as claimed in claim 7, wherein - Ar - and - Ar' - are each 1,4-phenylene.

**9.** The process as claimed in either of claims 7 and 8, wherein - R - is - $CH_2$ -.

**10.** The process as claimed in either of claims 7 and 8, wherein - R - is

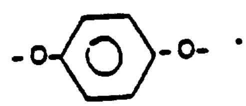

**11.** The process as claimed in any one of claims 7, 8, 9 and 10, wherein the proportions of the diamine components B, C and D relative to the total amount of diamine components in mol % are within an area which is defined by the following cornerpoints (cf. figure):
Point R' corresponds to 20% of B, 50% of C and 30% of D
Point S' corresponds to 37.5% of B, 32.5% of C and 30% of D
Point T' corresponds to 55% of B, 32.5% of C and 12.5% of D
Point U' corresponds to 55% of B, 40% of C and 5% of D
Point V' corresponds to 40% of B, 55% of C and 5% of D
Point W' corresponds to 20% of B, 55% of C and 25% of D.

**12.** The process as claimed in any one of claims 7, 8, 9, 10 and 11, wherein the structural unit containing m-bonds is the divalent radical of isophthalic acid and/or of m-phenylenediamine or of 3,4'- or 3',4-diaminobenzanilide.

**Revendications**

**Revendications pour les Etats contractants suivants : AT, BE, CH, DE, DK, FR, GB, GR, IT, LI, LU, NL**

**1.** Copolyamide aromatique, soluble dans les solvants organiques de polyamides, caractérisé en ce qu'il comporte au moins 95 % en moles d'unités constitutives répétitives ayant les formules

A - OC - Ar - CO -

et

B - NH- Ar' - NH -

C 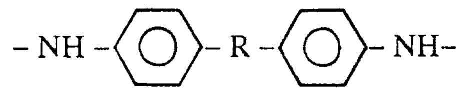

D 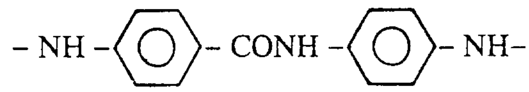

et jusqu'à 5 % en moles d'unités constitutives E et/ou F qui contiennent un noyau aromatique dont les liaisons présentes dans la chaîne de la molécule du polymère se trouvent en position méta les unes par rapport aux autres, et qui sont dérivées d'acides dicarboxyliques aromatiques (E') et/ou de diamines aromatiques (F'), la somme des fractions molaires des unités constitutives A + E et la somme des fractions molaires des unités constitutives B + C + D + F étant identiques,

-Ar- et -Ar'- représentent des restes aromatiques divalents monocycliques ou bicycliques condensés, dont les liaisons de valence sont en position para ou dans des positions comparables coaxiales ou parallèles, et qui peuvent être substitués par un ou deux restes inertes comme des restes alkyle de 1 à 4 atomes de carbone ou des halogènes, et

-R- représente un reste méthylène non substitué ou substitué ou un groupe -O-Ar-O-, où -Ar- a la même structure que ci-dessus, et les pourcentages en moles des constituants diamine B, C et D, par rapport à la quantité totale des constituants diamine B, C et D, se trouvent à l'intérieur d'un domaine qui est défini par les points angulaires suivants (voir la figure):

le point R correspond à 15 % de B; 45 % de C; 40 % de D
le point S correspond à 30 % de B; 30 % de C; 40 % de D
le point T correspond à 60 % de B; 30 % de C; 10 % de D
le point U correspond à 60 % de B; 37,5 % de C; 2,5 % de D
le point V correspond à 37,5 % de B; 60 % de C; 2,5 % de D
le point W correspond à 15 % de B; 60 % de C; 25 % de D

et le copolyamide a une viscosité intrinsèque d'environ 2,5 - 5,0 dl/g (mesurée sur des solutions de 0,5 g de polyamide dans 100 ml d'acide sulfurique à 98 % en masse à 25 °C).

**2.** Copolyamide aromatique selon la revendication 1, caractérisé en ce que -Ar- et -Ar'- représentent chacun un reste 1,4-phénylène.

**3.** Copolyamide aromatique selon l'une des revendications précédentes, caractérisé en ce que -R- signifie $-CH_2-$.

**4.** Copolyamide aromatique selon l'une des revendications 1 ou 2, caractérisé en ce que -R- signifie

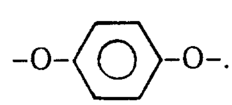

**5.** Copolyamide aromatique selon l'une des revendications précédentes, caractérisé en ce que les pourcentages en moles des constituants diamine B, C et D, par rapport à la quantité totale des constituants diamine B, C et D, se trouvent à l'intérieur d'un domaine qui est défini par les points angulaires suivants (voir la figure):

le point R' correspond à 20 % de B; 50 % de C; 30 % de D
le point S' correspond à 37,5 % de B; 32,5 % de C; 30 % de D
le point T correspond à 55 % de B; 32,5 % de C; 12,5 % de D
le point U' correspond à 55 % de B; 40 % de C; 5 % de D
le point V' correspond à 40 % de B; 55 % de C; 5 % de D
le point W' correspond à 20 % de B; 55 % de C; 25 % de D.

6. Copolyamide aromatique selon l'une au moins des revendications 1 à 5, caractérisé en ce que l'unité constitutive contenant des liaisons en méta est le reste divalent de l'acide isophtalique et/ou de la m-phénylènediamine ou du 3,4'- ou 3',4-diaminobenzanilide.

7. Procédé de préparation des copolyamides aromatiques de la revendication 1, par polycondensation d'un chlorure d'acide dicarboxylique avec des diamines aromatiques dans un solvant de polyamides connu, éventuellement en présence d'un halogénure alcalin ou alcalino-terreux, à des températures de -20 °C à 120 °C, caractérisé en ce que l'on fait réagir 95 à 100 % en moles de chlorures d'acides de formule

Cl-OC-Ar-CO-Cl (A')

et 0 à 5 % en moles de dichlorures d'acides dicarboxyliques aromatiques contenant des liaisons en méta (E') avec une quantité équivalente d'un mélange de diamines qui est composé de 95 à 100 % en moles d'un mélange de diamines constitué par 15 à 60 % en moles de diamines de formule

$NH_2$ - Ar' - $NH_2$ (B')

30 à 60 % en moles de diamines de formule

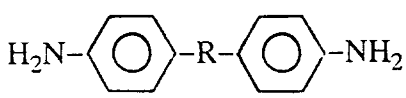 (C')

et
2,5 à 40 % en moles de 4,4'-diaminobenzanilide (D'), et de 0 à 5 % en moles de diamines contenant des liaisons en méta (F'), -Ar-, -Ar'- et -R- ayant la signification donnée ci-dessus.

8. Articles façonnés, comme des fils, des fibres, de la pâte de fibres, des films et des feuilles, caractérisés en ce qu'ils sont formés par un polyamide aromatique de la revendication 1.

**Revendications pour l'Etat contractant suivant : ES**

1. Articles façonnés, comme des fils, des fibres, de la pâte de fibres, des films et des feuilles, formés par des copolyamides aromatiques qui sont solubles dans les solvants organiques de polyamides, caractérisés en ce que les copolyamides aromatiques comportent au moins 95 % en moles d'unités constitutives répétitives ayant les formules

A - OC - Ar - CO -

et

B - NH - Ar' - NH -

C 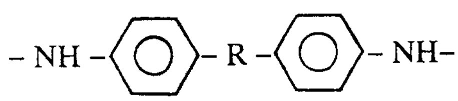

D 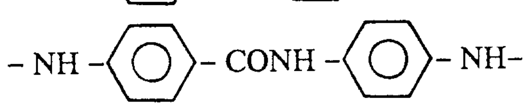

et jusqu'à 5 % en moles d'unités constitutives E et/ou F qui contiennent un noyau aromatique dont les liaisons présentes dans la chaîne de la molécule du polymère se trouvent en position méta les unes par rapport aux autres, et qui sont dérivées d'acides dicarboxyliques aromatiques (E') et/ou de diamines aromatiques (F'), la somme des fractions molaires des unités constitutives A + E et la somme des fractions molaires des unités constitutives B + C + D + F étant identiques,

-Ar- et -$Ar^1$- représentent des restes aromatiques divalents monocycliques ou bicycliques condensés, dont les liaisons de valence sont en position para ou dans des positions comparables coaxiales ou parallèles, et qui peuvent être substitués par un ou deux restes inertes comme des restes alkyle de 1 à 4 atomes de carbone ou des halogènes, et

-R- représente un reste méthylène non substitué ou substitué ou un groupe -O-Ar-O-, où -Ar- a la même structure que ci-dessus, et les pourcentages en moles des constituants diamine B, C et D, par rapport à la quantité totale des constituants diamine B, C et D, se trouvent à l'intérieur d'un domaine qui est défini par les points angulaires suivants (voir la figure):

le point R correspond à 15 % de B; 45 % de C; 40 % de D
le point S correspond à 30 % de B; 30 % de C; 40 % de D
le point T correspond à 60 % de B; 30 % de C; 10 % de D
le point U correspond à 60 % de B; 37,5 % de C; 2,5 % de D
le point V correspond à 37,5 % de B; 60 % de C; 2,5 % de D
le point W correspond à 15 % de B; 60 % de C; 25 % de D

et le copolyamide a une viscosité intrinsèque d'environ 2,5 - 5,0 dl/g (mesurée sur des solutions de 0,5 g de polyamide dans 100 ml d'acide sulfurique à 98 % en masse à 25 °C).

**2.** Articles façonnés selon la revendication 1, caractérisés en ce que -Ar-et -Ar'- représentent chacun un reste 1,4-phénylène.

**3.** Articles façonnés selon l'une des revendications précédentes, caractérisés en ce que -R- signifie $-CH_2-$.

**4.** Articles façonnés selon l'une des revendications 1 ou 2, caractérisés en ce que -R- signifie

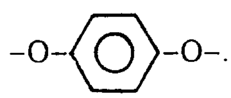

**5.** Articles façonnés selon l'une des revendications précédentes, caractérisés en ce que les pourcentages en moles des constituants diamine B, C et D, par rapport à la quantité totale des constituants diamine B, C et D, se trouvent à l'intérieur d'un domaine qui est défini par les points angulaires suivants (voir la figure):

le point R' correspond à 20 % de B; 50 % de C; 30 % de D
le point S' correspond à 37,5 % de B; 32,5 % de C; 30 % de D
le point T correspond à 55 % de B; 32,5 % de C; 12,5 % de D
le point U' correspond à 55 % de B; 40 % de C; 5 % de D
le point V' correspond à 40 % de B; 55 % de C; 5 % de D
le point W' correspond à 20 % de B; 55 % de C; 25 % de D.

**6.** Articles façonnés selon l'une au moins des revendications 1 à 5, caractérisés en ce que l'unité constitutive contenant des liaisons en méta est le reste divalent de l'acide isophtalique et/ou de la m-phénylènediamine ou du 3,4'- ou 3',4-diaminobenzanilide.

**7.** Procédé de préparation des copolyamides aromatiques de la revendication 1, par polycondensation d'un chlorure d'acide dicarboxylique avec des diamines aromatiques dans un solvant de polyamides connu, éventuellement en présence d'un halogénure alcalin ou alcalino-terreux, à des températures de -20 °C à 120 °C, caractérisé en ce que l'on fait réagir 95 à 100 % en moles de chlorures d'acides de formule

Cl-OC-Ar-CO-Cl (A')

et 0 à 5 % en moles de dichlorures d'acides dicarboxyliques aromatiques contenant des liaisons en méta (E') avec une quantité équivalente d'un mélange de diamines qui est composé de 95 à 100 % en moles d'un mélange de diamines constitué par 15 à 60 % en moles de diamines de formule

$NH_2$ - Ar' - $NH_2$ (B')

30 à 60 % en moles de diamines de formule

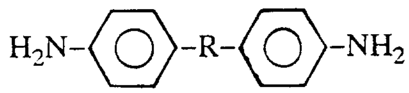

(C')

et

2,5 à 40 % en moles de 4,4'-diaminobenzanilide (D'), et de 0 à 5 % en moles de diamines contenant des liaisons en méta (F'), -Ar-, -Ar'- et -R- ayant la signification donnée ci-dessus.

**8.** Procédé selon la revendication 7, caractérisé en ce que -Ar- et -Ar'-représentent chacun un reste 1,4-phénylène.

**9.** Procédé selon l'une des revendications 7 et 8, caractérisé en ce que -R-signifie $-CH_2-$.

**10.** Procédé selon l'une des revendications 7 ou 8, caractérisé en ce que -R- signifie

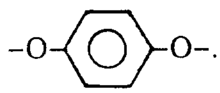

**11.** Procédé selon l'une des revendications 7, 8, 9 ou 10, caractérisé en ce que les pourcentages en moles des constituants diamine B, C et D, par rapport à la quantité totale des constituants diamine B, C et D, se trouvent à l'intérieur d'un domaine qui est défini par les points angulaires suivants (voir la figure):
le point R' correspond à 20 % de B; 50 % de C; 30 % de D
le point S' correspond à 37,5 % de B; 32,5 % de C; 30 % de D
le point T correspond à 55 % de B; 32,5 % de C; 12,5 % de D
le point U' correspond à 55 % de B; 40 % de C; 5 % de D
le point V' correspond à 40 % de B; 55 % de C; 5 % de D
le point W' correspond à 20 % de B; 55 % de C; 25 % de D.

**12.** Procédé selon l'une des revendications 7, 8, 9, 10 ou 11, caractérisé en ce que l'unité constitutive contenant des liaisons en méta est le reste divalent de l'acide isophtalique et/ou de la m-phénylènediamine ou du 3,4'- ou 3',4-diaminobenzanilide.

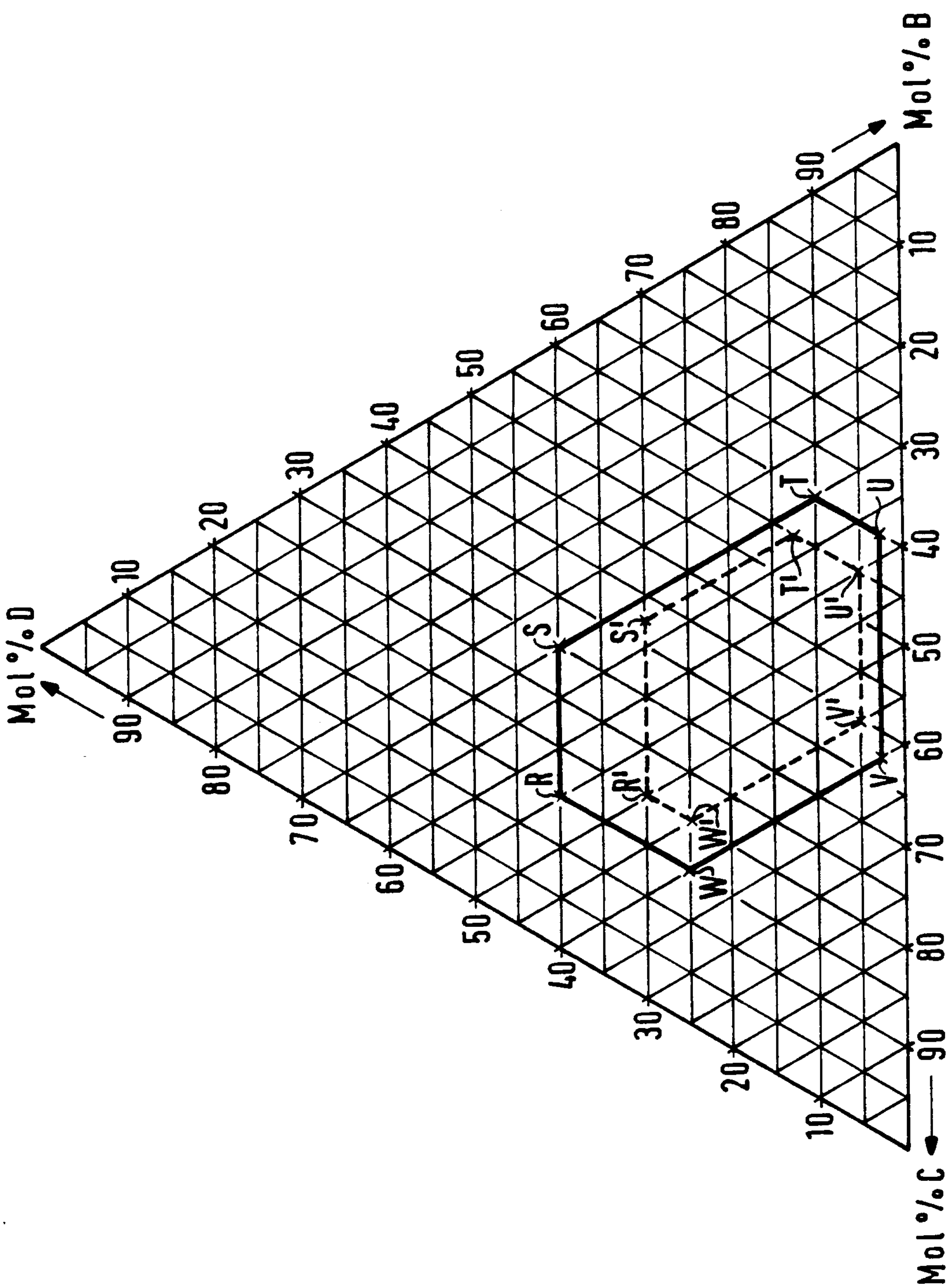
Mol %. D
Mol %. B
Mol %. C
10
20
30
40
50
60
70
80
90
R
S
T
U
V
W
R'
S'
T'
U'
V'
W'